(19) **Europäisches Patentamt / European Patent Office / Office européen des brevets**

(11) **EP 3 854 673 B1**

(12) **FASCICULE DE BREVET EUROPEEN**

(45) Date de publication et mention de la délivrance du brevet:
**11.10.2023 Bulletin 2023/41**

(21) Numéro de dépôt: **21162744.3**

(22) Date de dépôt: **27.11.2018**

(51) Classification Internationale des Brevets (IPC):
***B63B 35/44*** *(2006.01)*

(52) Classification Coopérative des Brevets (CPC):
**B63B 35/44; B63B 77/10;** B63B 2001/126; B63B 2035/446; B63B 2241/12; Y02E 10/72; Y02E 10/727

(54) **PROCÉDÉ D'INSTALLATION D'UNE ÉOLIENNE OFFSHORE MUNIE D'UNE STRUCTURE DE SUPPORT FLOTTANT**

VERFAHREN ZUR INSTALLATION EINER OFFSHORE-WINDKRAFTANLAGE MIT EINER SCHWIMMENDEN TRÄGERSTRUKTUR

METHOD FOR INSTALLING AN OFFSHORE WIND TURBINE PROVIDED WITH A FLOATING SUPPORT STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2017 FR 1761342**

(43) Date de publication de la demande:
**28.07.2021 Bulletin 2021/30**

(62) Numéro(s) de document de la (des) demande(s) initiale(s) en application de l'article 76 CBE:
**18827192.8 / 3 717 343**

(73) Titulaire: **SAIPEM S.A.**
**78180 Montigny Le Bretonneux (FR)**

(72) Inventeurs:
• **COLMARD, Christophe**
**78280 GUYANCOURT (FR)**
• **FRANC, Paul**
**75011 PARIS (FR)**

• **LE CLEZIO, Jean-Baptiste**
**78000 VERSAILLES (FR)**
• **GENTIL, Frédéric**
**78180 MONTIGNY LE BRETONNEUX (FR)**
• **DELAHAYE, Thierry**
**92170 VANVES (FR)**
• **CHAZOT, Nicolas**
**91190 GIF SUR YVETTE (FR)**
• **HALLOT, Raymond**
**78960 VOISINS LE BRETONNEUX (FR)**

(74) Mandataire: **Cabinet Beau de Loménie**
**158, rue de l'Université**
**75340 Paris Cedex 07 (FR)**

(56) Documents cités:
EP-A1- 3 153 398      WO-A1-2016/161931
WO-A1-2017/157399     JP-A- 2002 285 951
JP-A- 2015 009 591    US-A1- 2003 168 864
US-A1- 2008 240 864   US-A1- 2013 019 792
US-A1- 2017 051 724

**Description**

Arrière-plan de l'invention

La présente invention se rapporte au domaine général des éoliennes offshore, c'est-à-dire implantées au large des côtes, et plus particulièrement aux structures de support flottant pour éoliennes offshore flottantes. L'invention concerne un procédé d'installation d'une éolienne offshore munie d'une telle structure de support.

Une éolienne offshore a pour but d'utiliser l'énergie du vent afin de produire de l'électricité grâce à une turbine et à un générateur électrique. Il existe deux principaux types d'éoliennes offshore : les éoliennes fixes qui sont implantées sur les fonds marins (à de faibles profondeurs typiquement inférieures à 50m), et les éoliennes flottantes qui offrent l'avantage de pouvoir être construites sur terre et implantées dans des zones où la profondeur des fonds marins dépasse typiquement 50m.

Les éoliennes flottantes comprennent une turbine généralement formée par un moteur à plusieurs pales rotatives à axe horizontal et un générateur électrique accouplé au moteur, le moteur et le générateur étant fixés à une extrémité supérieure d'un mât (ou pylône) vertical. L'extrémité inférieure du mât est quant à elle montée sur une structure de support flottant.

Il existe quatre familles principales de structure de support flottant pour éolienne offshore : les barges, les plateformes semi-submersibles, les plateformes sur jambages tendus (ou plateformes TLP pour « Tension-Leg Platform » en anglais), et les plateformes « spar », c'est-à-dire des plateformes à fondation immergée et à ballast stabilisé qui sont dotées d'ancrages caténaires permettant de fixer l'éolienne par accrochage au fond marin. Parmi ces familles, les plateformes « spar » ont une structure relativement simple et reposent sur l'utilisation de technologies de fabrication et d'installation qui sont largement éprouvées.

On pourra se référer notamment à la publication WO 2005/021961 qui décrit un exemple de réalisation d'une plateforme « spar ». La publication WO 2006/121337 donne les détails d'un système d'ancrage d'une telle plateforme « spar », tandis que la publication WO 2006/132539 est relative à un procédé d'installation en mer de cette plateforme. Les documents JP 2015-009591, JP 2002-285951, US 2013/019792, EP 3,153,398, WO 2017/157399, WO 2016/161931, US 2003/168864, US 2008/240864 et US 2017/051724 décrivent différents procédés d'installation d'une éolienne offshore.

Les plateformes « spar » présentent néanmoins un certain nombre d'inconvénients qui limitent fortement leur capacité d'utilisation dans le domaine de l'éolien offshore. Pour une éolienne de puissance élevée, il est nécessaire pour installer l'éolienne de disposer d'une profondeur minimale de l'ordre d'une centaine de mètres pour déployer une plateforme « spar ». Plus généralement, il est nécessaire de disposer d'une zone profonde et avec des conditions de mer relativement calmes pour gérer les phases critiques que sont le retournement de la plateforme de la position horizontale à la position verticale, le ballastage de la plateforme, et l'assemblage de la turbine par-dessus la plateforme. De plus, le recours à des plateformes « spar » requiert l'utilisation de bateaux-grues de grande capacité qui sont rares et onéreux pour installer les éoliennes sur les plateformes en mer. En outre, les plateformes « spar » présentent une grande traînée dans l'eau qui limite les vitesses de déplacement de ces plateformes dans le cas de leur remorquage.

Ces inconvénients des plateformes « spar » limitent l'implantation d'éoliennes dans des zones disposant d'un fjord comme base logistique, ce qui en pratique se trouve dans peu d'endroits dans le monde, hormis en Norvège. De plus, les coûts atteignables par plateformes (dus notamment à la quantité d'acier très importante en regard des besoins de flottaison) sont limités à des valeurs élevées.

Par ailleurs, la stabilité d'une éolienne flottante peut se décomposer en un problème de stabilité statique et un problème de stabilité dynamique. Le problème de la stabilité dynamique provient de forces non constantes dans le temps exerçant un couple déstabilisant pour la structure, induisant des mouvements. Ceux-ci sont liés aux fluctuations de la vitesse du vent sur l'éolienne ou aux vagues. L'énergie des vagues est essentiellement concentrée dans les premiers mètres de mer en-dessous de la surface libre. Les structures de support flottant majoritairement situées proche de la surface libre comme les barges ou les plateformes semi-submersibles sont fortement soumises aux vagues, de sorte que ces structures sont généralement concernées par des problèmes de stabilité dynamique.

Objet et résumé de l'invention

La présente invention a donc pour but principal de proposer une structure de support flottant pour éolienne offshore qui ne présente pas les inconvénients précités.

Ce but est atteint grâce à un procédé d'installation d'une éolienne offshore selon la revendication 1.

La structure de support flottant est ainsi constituée de deux éléments (le flotteur et le contrepoids) qui sont reliés entre eux par des liens de ballast : l'élément flottant est facile à transporter, son tirant d'eau en phase de construction et d'installation est faible, et il est compact et installable par des solutions de l'industrie offshore classique, le mât de l'éolienne et la nacelle pouvant être installés lors de la construction du flotteur.

La structure de support flottant est remarquable notamment par la structure minimale du flotteur qui présente une forme de roue de vélo portée à l'horizontale dans laquelle la poussée d'Archimède qui s'exerce sur elle serait fournie en partie par la structure tubulaire centrale (correspondant au moyeu de la roue) et en partie par la structure de forme torique ou polygonale (correspondant au pneu de la roue).

Par ailleurs, la forme particulière de la structure principale du flotteur permet d'obtenir une poussée qui est distribuée de façon continue autour de l'axe vertical, et non une poussée ponctuelle. De même, cette continuité de forme permet d'éviter que les efforts de la houle sur le flotteur ne varient avec les variations d'incidence, au contraire d'un flotteur qui serait à distribution ponctuelle.

De plus, une telle structure permet de recourir à une profondeur d'immersion du flotteur qui est typiquement comprise entre 15 et 30 m. A une telle profondeur, du fait de la continuité de forme de la structure principale du flotteur, la structure de support flottant est quasiment transparente aux effets de la houle et des courants de surface, ce qui permet à l'éolienne de s'affranchir au maximum des problèmes de stabilité dynamique. De manière plus générale, l'éolienne utilisant une telle structure de support flottant pourra être implantée dans des zones économiquement accessibles car un minimum de profondeur d'eau de l'ordre de 70m suffira.

De la sorte, la structure de support flottant permet l'exploitation de l'énergie éolienne à des fins de production d'électricité par des profondeurs d'eau supérieures à 70 m, sans limite haute de profondeur d'eau. L'éolienne utilisant une telle structure de support flottant pourra donc être implantée dans des zones économiquement accessibles.

La structure de support flottant permet d'obtenir une stabilité accrue en rotation au niveau de l'éolienne, tant en mouvement qu'en accélération. La masse de matériaux pour la fabrication de cette structure de support est relativement faible, ce qui réduit les coûts de fabrication. Cette structure de support flottant est également compatible avec toutes les conceptions actuelles d'éoliennes flottantes, d'une puissance nominale allant jusqu'à 9,5 MW. La structure reste compatible avec les futures éoliennes d'une puissance de 10 à 15 MW et plus qui devraient entrer en production dans les années à venir.

La structure de support flottant apporte une grande stabilité à l'éolienne supportée tant dans l'amplitude en mouvements de rotation que dans les accélérations angulaires. Cette stabilité relative aux conditions de houle, de vent et de courant rencontrées dans les différentes régions du monde reste compatible avec les spécifications techniques des éoliennes de l'industrie de l'éolien offshore.

La structure de support flottant nécessite des niveaux de tensions minimisés dans les lignes d'ancrage retenant l'éolienne. De plus, elle est compatible avec les designs de câbles électriques d'export standards de l'industrie. Elle minimise l'emprise surfacique à la surface libre, ne gêne physiquement pas la navigation de petits navires à proximité immédiate, et minimise la masse de matériaux structurels utilisés par les structures de support flottant d'éoliennes.

La fabrication de la structure de support flottant peut être réalisée dans les différents matériaux de structure. Elle utilise de préférence des matériaux métalliques et des procédés de fabrication standards de l'industrie de la construction de structure offshore. La structure de support flottant peut mettre en outre en oeuvre des matériaux non métalliques au niveau des tendons et du système d'ancrage qui sont dans la gamme des capacités standards actuelles de l'industrie.

Par ailleurs, les dimensions, poids et tirant d'eau de la structure de support flottant sont compatibles avec la plupart des ports industriels et permettent l'assemblage des éléments de l'éolienne sur la structure de support amarrée bord à quai. L'assemblage de la structure de support et de l'éolienne peut être remorqué par flottaison par des conditions de mer compatibles avec la plupart des régions du globe. Ces opérations peuvent se faire en toute sécurité avec des conditions de risques opérationnels acceptables en utilisant des moyens d'installation classiques de l'industrie. Alternativement, l'assemblage de la structure de support flottant et de l'éolienne peut se faire en mer.

Afin d'avoir une structure de support flottant stable par le poids et non par la forme, il convient que le point d'action de la poussée d'Archimède soit situé au-dessus de son centre de gravité. Le centre de gravité d'une éolienne étant situé assez haut au niveau du mât, du fait du poids de la nacelle et des pales, il convient d'ajouter un contrepoids dans le bas de la structure de support. Ce contrepoids va appliquer un couple résistant au niveau de la structure de support.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 est une vue de côté d'une éolienne offshore montée sur une structure de support flottant ;
- la figure 2 est une vue en perspective du flotteur de la structure de support flottant de la figure 1 ;
- la figure 3 est une vue en perspective et en arraché d'un panier de la structure de support flottant de la figure 1 ;
- la figure 4 est une vue de dessus du panier de la figure 4 ;
- la figure 5 est une vue en coupe selon V-V de la figure 4 ;

- les figures 6A à 6Q illustrent les différentes étapes d'un procédé d'installation d'une éolienne offshore munie d'une structure de support flottant ne relevant pas de l'invention ;
- les figures 7A à 7K illustrent les différentes étapes d'un procédé d'installation d'une éolienne offshore munie d'une structure de support flottant ne relevant pas de l'invention ; et
- les figures 8A à 8H illustrent les différentes étapes d'un procédé d'installation d'une éolienne offshore munie d'une structure de support flottant ne relevant pas de l'invention ;
- les figures 9A à 10C illustrent les différentes étapes d'un procédé d'installation d'une éolienne offshore munie d'une structure de support flottant ne relevant pas de l'invention ;
- les figures 10A à 10D illustrent les différentes étapes d'un procédé d'installation d'une éolienne offshore munie d'une structure de support flottant ne relevant pas de l'invention ; et
- les figures 11A à 11F illustrent les différentes étapes d'un procédé d'installation d'une éolienne offshore munie d'une structure de support flottant selon l'invention.

Description détaillée de l'invention

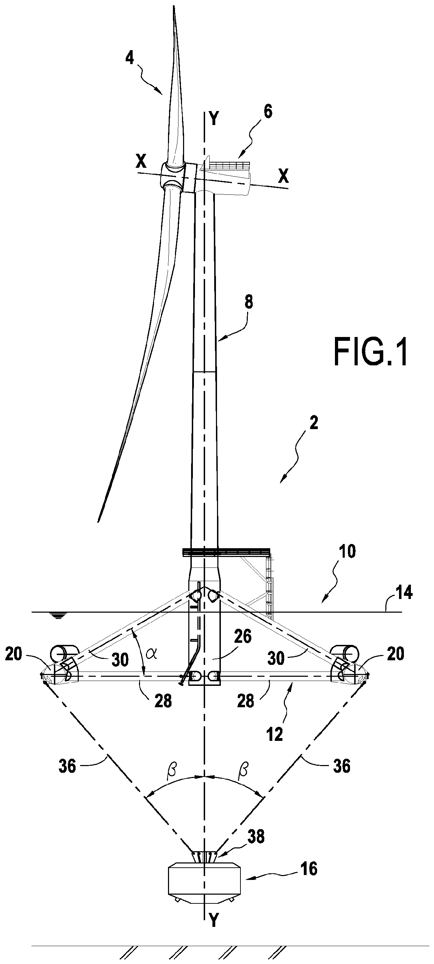

La figure 1 représente, en vue de côté, une éolienne offshore flottante 2 implantée en mer au large des côtes.

De façon connue, une telle éolienne 2 comprend une turbine 4 généralement formée par un moteur à plusieurs pales rotatives à axe X-X sensiblement horizontal, et un générateur électrique 6 accouplé au moteur, le moteur et le générateur étant fixés à une extrémité supérieure d'un mât 8 (ou pylône) vertical. L'extrémité inférieure du mât 8 est quant à elle montée sur une structure de support flottant 10.

La structure de support flottant 10 se compose d'un flotteur 12 qui est destiné à être en partie immergé (le niveau de la mer est symbolisé sur la figure 1 par la ligne 14) et d'un contrepoids 16 qui est relié au flotteur 12 et qui est destiné à être immergé sous celui-ci. L'extrémité inférieure du mât 8 de l'éolienne vient s'assembler sur le flotteur 12 de la structure de support flottant.

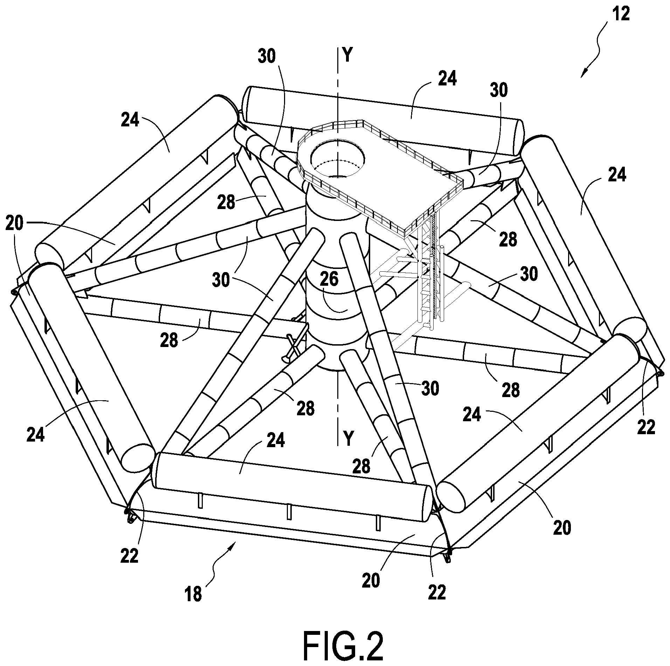

Comme représenté sur la figure 2, le flotteur 12 comprend une structure principale 18 une forme polygonale à au moins cinq côtés, cette structure principale de forme polygonale étant formée par un assemblage de tubes 20 à section circulaire destinés à être immergés. Alternativement, la structure principale présente une forme torique. Dans cette variante, elle est formée par un unique tube à section circulaire.

Sur l'exemple illustré sur ces figures, la structure principale 18 du flotteur a une forme polygonale à six côtés. Une telle forme hexagonale représente le mode de réalisation préférentiel. En effet, cette forme offre le meilleur compromis en termes de structure et de comportement hydrodynamique.

Les tubes 20 de la structure principale du flotteur sont à section circulaire et sont raccordés entre eux par l'intermédiaire de plaques de jonction 22 qui sont soudées aux extrémités des tubes. Ces tubes 20 sont raidis par un système de raidisseurs croisés (non représentés sur les figures) permettant d'optimiser le poids de la structure soumise à la pression hydrostatique. Les tubes sont compartimentés de sorte que la stabilité du système ne soit pas remise en cause si l'un de ces compartiments venait à se remplir d'eau de mer.

Par ailleurs, la structure principale 18 du flotteur comprend en outre une structure de flottabilité additionnelle formée par un assemblage de flotteurs additionnels 24 qui sont montés sur les tubes 20 et qui permettent d'élever le franc-bord de l'ensemble flotteur et éolienne dans les phases de remorquage afin d'en améliorer la stabilité. Ces flotteurs additionnels peuvent être récupérés après la phase de remorquage ou être laissés sur le flotteur après son immersion.

Le flotteur 12 comprend également une structure tubulaire centrale 26 centré sur un axe vertical Y-Y et ayant un diamètre adapté pour recevoir le mât 8 de l'éolienne. Cette structure centrale 26 comprend une section (non représentée sur les figures) qui est apte à être ballastée avec de l'eau de mer afin d'ajuster la ligne de flottaison du flotteur à la profondeur d'immersion souhaitée.

Le flotteur 12 comprend encore une première série de bracons horizontaux 28 qui sont régulièrement répartis autour de l'axe vertical Y-Y et qui relient chaque extrémité des tubes 20 de la structure principale à la structure centrale 26, et plus particulièrement à la partie basse de celle-ci. Il y a autant de bracons horizontaux 28 que de tubes 20 formant la structure principale.

Cette structure de bracons horizontaux 28, de type réticulée bien que très simple, permet de réduire les moments de flexion dans les tubes 20 de la structure principale à des moments secondaires. Ceci permet d'optimiser le mode de travail des tubes en traction-compression.

Le flotteur 12 comprend encore une seconde série de bracons obliques 30 qui sont également régulièrement répartis autour de l'axe vertical Y-Y et qui relient chaque extrémité des tubes 20 de la structure principale à la structure centrale, et plus particulièrement à la partie haute de celle-ci, en formant un angle $\alpha$ compris entre 15° et 60° - et de préférence égal à 30° - avec les bracons horizontaux 28. Comme pour les bracons horizontaux, il existe autant de bracons obliques 30 que de tubes 20 formant la structure principale.

Les bracons horizontaux 28 et obliques 30 se présentent sous la forme de tubes. La connexion entre les bracons et la structure principale du flotteur se fait au niveau des plaques de jonction 22. Cette technique d'assemblage permet de faciliter l'ajustement et la soudure des bracons de grandes dimensions.

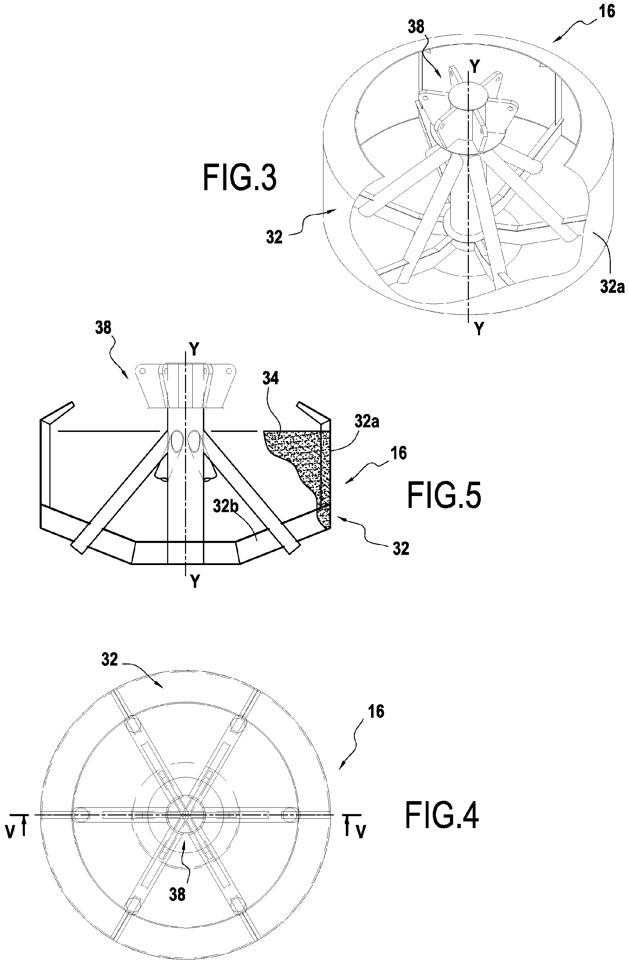

Par ailleurs, comme représenté sur les figures 3 à 5, le contrepoids 16 de la structure de support flottant comprend un panier 32 qui est apte à recevoir un matériau de ballast 34.

Afin de fournir un contrepoids de masse importante tout en réduisant les coûts, il convient d'utiliser un matériau pondéreux à la fois économique et compatible avec l'environnement marin. Dans un mode de réalisation préféré, le meilleur compromis pour le matériau de ballast 34 est trouvé avec des matériaux de ballast lourd. Typiquement, ce matériau de ballastage peut être de la magnétite stabilisée chimiquement afin d'être rendue compatible avec l'environnement. Alternativement, ce matériau de ballast peut être du matériau de remblais, du sable, de la grenaille de fonte ou du métal de récupération.

Afin de pouvoir soutenir ce matériau de ballastage 34, il convient de le mettre dans un panier 32 conçu pour soutenir les efforts. Le diamètre du panier varie, selon les cas d'application, typiquement entre 8m et 22m et sa hauteur entre 6m et 10m.

Le panier 32 du contrepoids est constitué d'une enveloppe cylindrique 32a terminée par un fond 32b bombé ou tronconique dans sa partie inférieure. Le poids est repris par des liens de ballast 36 (ou tendons) - de préférence au nombre de six - reliant le panier à chaque extrémité des tubes 20 de la structure principale.

Plus précisément, ces liens de ballast 36 se rassemblent sur un connecteur central cylindrique 38 qui est situé au centre de l'enveloppe cylindrique 32a du panier dans sa partie supérieure.

Le connecteur central 38 permet de concentrer le poids du contrepoids en un point central situé dans l'axe de la structure centrale 26 du flotteur. Cette concentration du poids en un point est un facteur primordial à l'efficacité du système de contrepoids, il permet au lest de rester immobile par rapport au flotteur quel que soit l'angle d'inclinaison tant que les liens de ballast 36 restent tous tendus.

Comme représenté sur la figure 1, les liens de ballast 36 reliant le panier 32 à chaque extrémité des tubes 20 de la structure principale forment un angle $\beta$ compris entre 15° et 45° avec l'axe vertical Y-Y.

L'angle $\beta$ que forment les liens de ballast 36 avec l'axe vertical est de préférence donné par l'équation suivante :

$$\beta = \arctan \left[ ( Dc/2 + Lh + Df ) / ( P - Te - Ep - Gp ) \right]$$

dans laquelle : P est la profondeur d'eau ; Te est le tirant d'eau mesuré au bas de la structure principale ; Ep est l'épaisseur du panier ; Gp est la distance entre le bas du panier et le fond marin ; De est le diamètre de la structure centrale ; Lh est la longueur des bracons horizontaux ; et Df est le diamètre des tubes de la structure principale.

Le bas du flotteur 12 de la structure de support flottant est situé à une profondeur d'immersion typiquement de 25 m. La structure minimale permettant de reprendre des efforts de traction sont les liens de ballast 36. Le contrepoids est donc attaché au flotteur par autant de liens de ballast que la structure principale du flotteur a de côtés. Au niveau de celle-ci, les liens de ballast 36 sont connectés aux plaques de jonction 22.

Les liens de ballast 36 peuvent être les plus légers possibles car leur masse ne joue qu'un rôle marginal dans la stabilité de la structure de support flottant. Ils doivent par ailleurs être capables de reprendre les efforts générés par le poids du contrepoids et avoir une élasticité et une déformation minimale dans le temps.

Aussi, dans un mode de réalisation préféré, ces liens de ballast sont des cordages constitués de matériaux synthétiques ayant une faible élongation (typiquement du polyéthylène haute densité). Ces matériaux associent de bonnes propriétés mécaniques à un poids négatif dans l'eau (densité du matériau inférieure à 1). Alternativement, ces liens de ballast peuvent être des câbles, des chaînes ou des tubes métalliques.

L'écartement des points d'accroche des liens de ballast 36 sur la structure principale 18 du flotteur est choisi de sorte que lorsque l'inclinaison de la direction du mât 8 de l'éolienne avec l'axe vertical Y-Y est maximale, tous les liens de ballast demeurent en tension. Les efforts auxquels est soumis le système sont augmentés d'un facteur de sécurité dépendant du cas d'application. De cette manière, l'inclinaison de l'éolienne sous l'action de la résultante de traînée de la force du vent et du poids de l'éolienne entraîne un transfert de tension des liens de ballast situés dans le sens opposé au vent vers ceux situés dans le sens du vent. Le contrepoids reste alors dans l'axe du mât de l'éolienne et cette structure souple se comporte mécaniquement comme une structure rigide, le lest restant fixe par rapport au flotteur. En d'autres termes, cette structure pendulaire réalise la fonction de contrepoids d'une plateforme « spar », tout en ayant une structure plus légère, transparente à la houle et installable avec l'éolienne fixée sur le flotteur au port.

La structure de support flottant est conçue de manière à être stable sans système d'ancrage. Le système d'ancrage ne participe donc pas à la stabilité de la structure de support flottant. Cela engendre des niveaux de tension dans les lignes d'ancrages beaucoup plus faibles et des contraintes géotechniques sur les ancres amoindries.

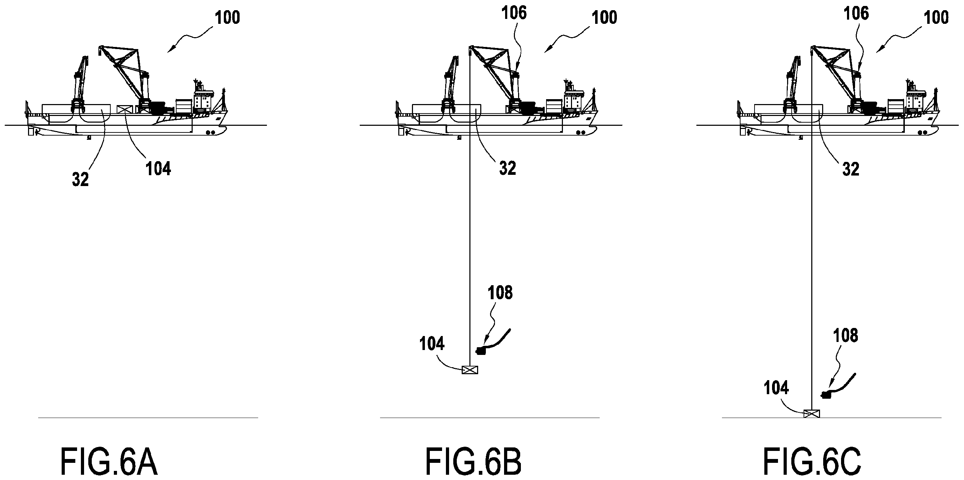

En liaison avec les figures 6A à 6Q, on décrira un procédé d'installation (ne relevant pas de l'invention et qui n'est présent qu'à titre illustratif) d'une éolienne offshore munie d'une structure de support flottant telle que décrite précédemment.

Les figures 6A à 6H illustrent les différentes étapes de préparation et d'installation au fond de la mer du contrepoids de la structure de support flottant.

Sur la figure 6A, une barge 100 transportant notamment le panier 32 du contrepoids de la structure de support flottant et un corps mort 104 est amenée en mer sur site. Le corps mort 104 est alors descendu en mer à la verticale de la barge 100 par une grue 106 (figure 6B) puis déposé sur le fond marin (figure 6C).

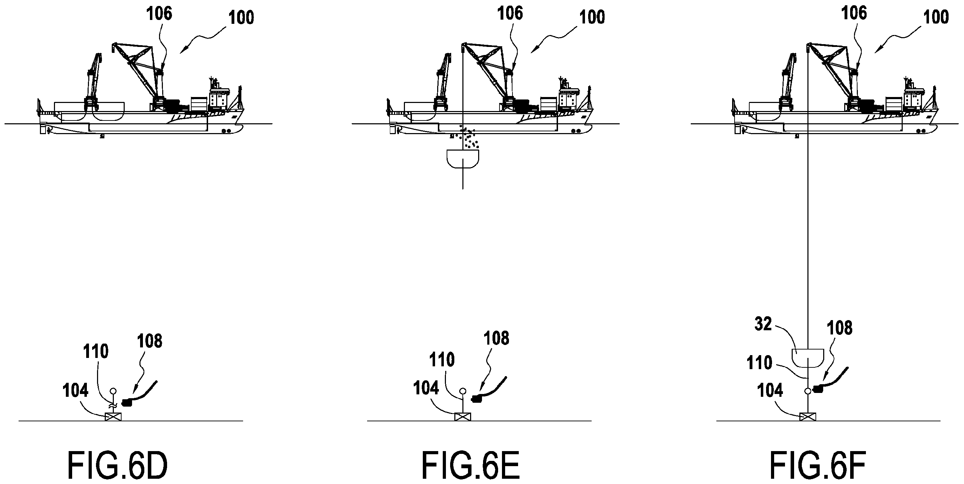

Un véhicule sous-marin téléguidé 108 (appelé aussi ROV pour « Remotely Operated Vehicle ») pour superviser ces opérations et pour installer ensuite un orin 110 sur le corps mort 104 comme représenté sur la figure 6D. Ici, l'orin 110 est un filin connecté à une bouée temporaire d'une part et à un corps mort 104 d'autre part, afin de fournir un point d'accroche au corps mort au-dessus du fond de la mer et en dessous de la profondeur définitive du panier de lest.

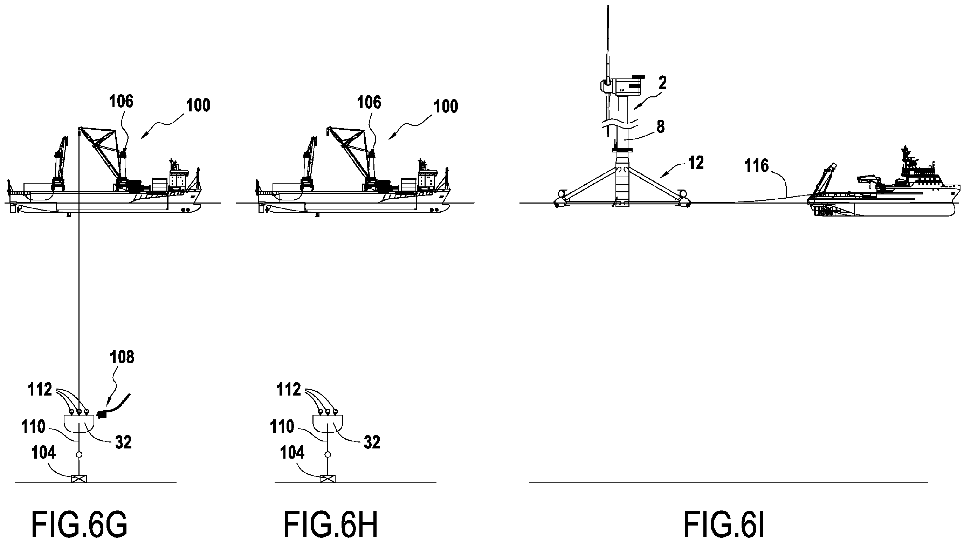

Au cours de l'étape suivante représentée par la figure 6E, le panier 32 (vide) du contrepoids de la structure de support flottant est également descendu par la grue 106 de la barge vers le fond de la mer pour être connecté à l'orin 110 sous le pilotage du ROV 108 (figure 6F). Des modules de flottaison 112 (au nombre de trois sur les figures) préalablement remplis d'air sont alors descendus en mer depuis la barge et fixés sur le panier 32 du contrepoids (figure 6G). A l'issue de cette étape, cet attelage est déconnecté de la barge 100 et le ROV 108 est remonté à bord de celle-ci (figure 6H).

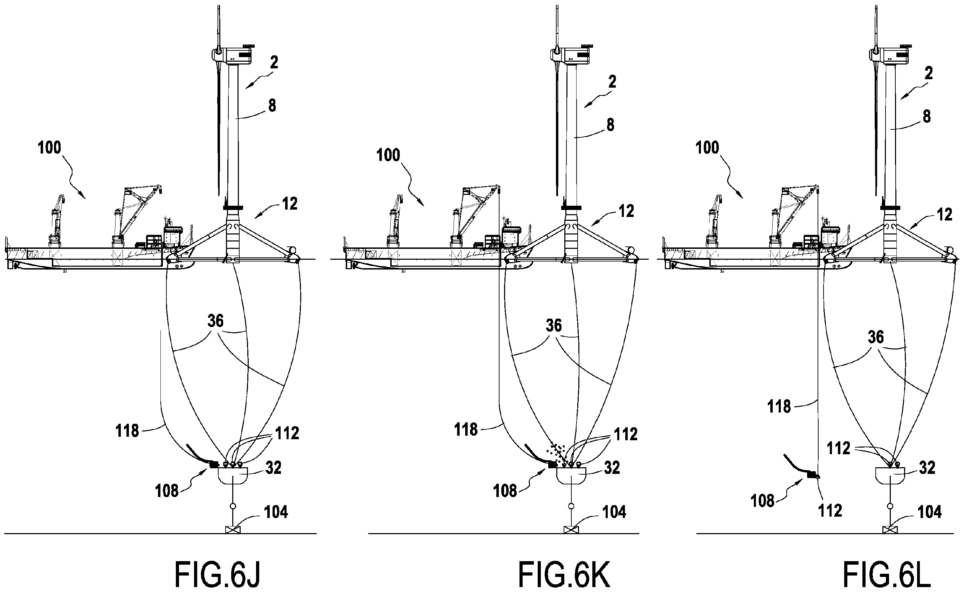

Comme illustré sur les figures 6I et 6J, le flotteur 12 de la structure de support flottant sur lequel a été préalablement monté le mât 8 d'une éolienne 2 est alors remorqué par un remorqueur 114 à la verticale du panier 32 du contrepoids amarré au corps mort 104. Ce remorquage peut s'effectuer au moyen d'un remorqueur raccordé à la structure principale 18 du flotteur par un ou plusieurs câbles de remorquage 116.

Lorsque le flotteur 12 et l'éolienne 2 se trouvent à la verticale du panier 32 du contrepoids, le ROV 108 est à nouveau déployé pour venir connecter la structure principale du flotteur au panier au moyen des liens de ballast 36 (figure 6J). Afin de permettre de stabiliser la position du flotteur 12 au-dessus du panier du contrepoids, il pourra être nécessaire de recourir à plusieurs remorqueurs régulièrement espacés autour de celui-ci.

Au cours de l'étape suivante représentée par la figure 6K, l'air présent à l'intérieur des modules de flottaison 112 est alors libéré (et remplacé par de l'eau de mer). Le ROV 108 peut alors être piloté pour venir détacher les uns après les autres chaque module de flottaison vidé de son air pour le remonter dans la barge 100 au moyen d'un filin 118 de la grue 106 (figure 6L).

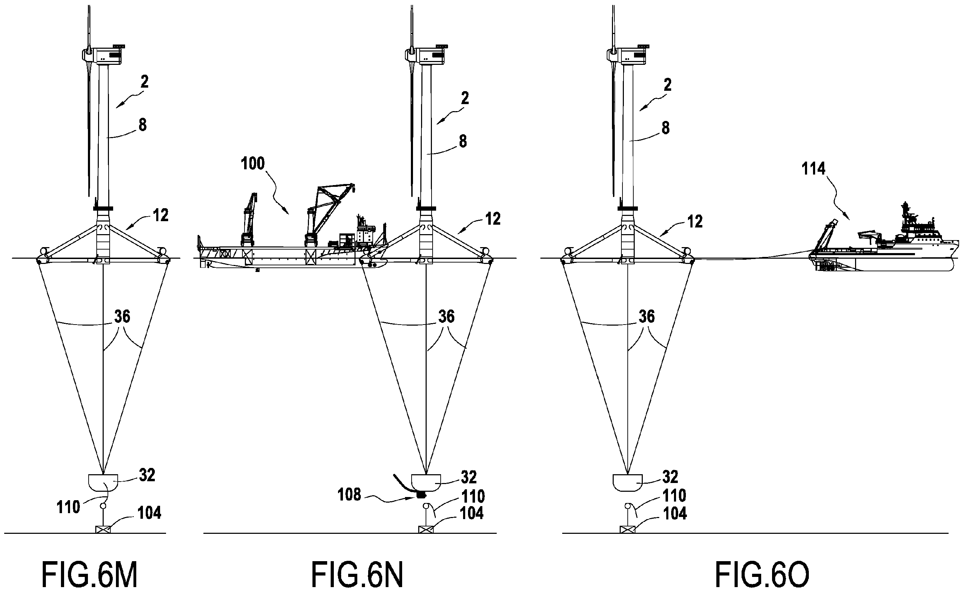

Une fois les modules de flottaison retirés, le panier 32 du contrepoids agit sur les liens de ballast 36 pour les tendre et l'orin 110 est quant à lui détendu (figure 6M). L'orin 110 peut ainsi être aisément déconnecté du panier du contrepoids par le ROV 108 (figure 6N). Le flotteur 12 et l'éolienne avec le panier 32 du contrepoids connecté par les liens de ballast sont alors remorqués par le remorqueur 114 jusqu'à la zone d'implantation de l'éolienne en mer (figure 6O).

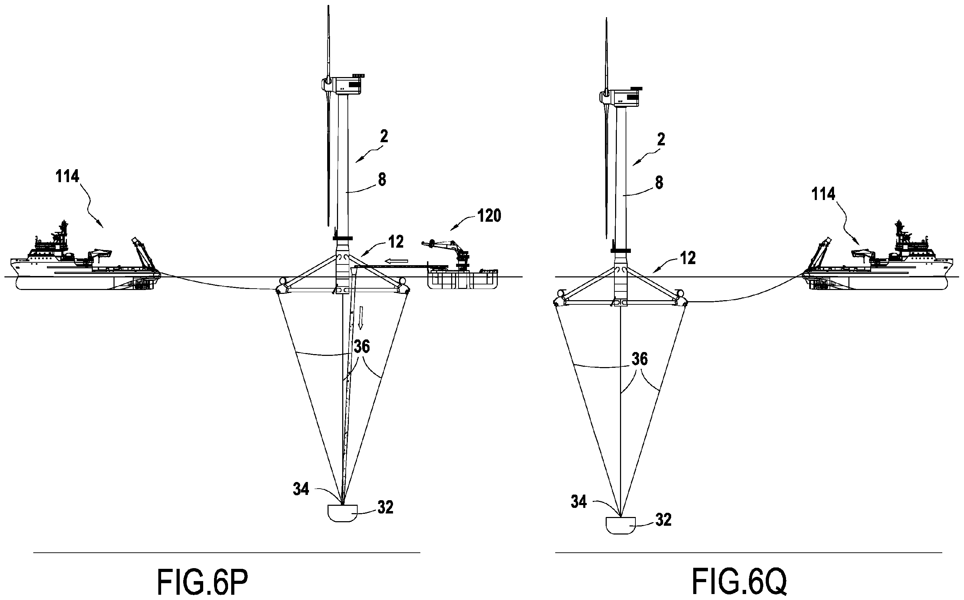

Une fois le flotteur 12 et l'éolienne 2 positionnés et maintenus à la verticale de sa zone d'implantation choisie, une barge 120 vient remplir le panier 32 du contrepoids avec le matériau de ballastage 34. Cette opération peut être réalisée grâce à un tube 122 reliant le panier à la barge 120 (figure 6P).

Comme représenté sur la figure 6Q, le remplissage du panier 32 du contrepoids par le matériau de ballastage 34 a pour conséquence de faire immerger le flotteur 12, cette immersion étant contrôlée pour permettre au bas du flotteur 12 de la structure de support flottant de se situer à sa profondeur d'immersion (typiquement de 25 m).

On notera que le contrepoids peut comprendre une pluralité de paniers recevant chacun un matériau de ballast et qui sont positionnés verticalement les uns en dessous des autres en étant régulièrement espacés (par exemple tous les 10m).

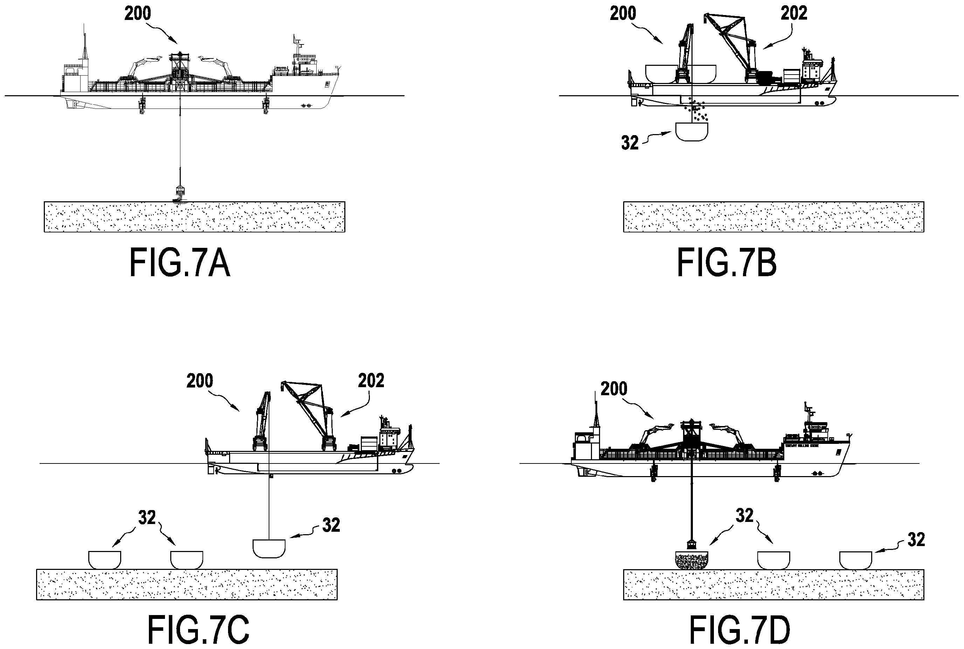

En liaison avec les figures 7A à 7K, on décrira à présent un procédé d'installation selon un deuxième mode de réalisation (ne relevant pas de l'invention et qui n'est présent qu'à titre illustratif) d'une éolienne offshore munie d'une structure de support flottant telle que décrite précédemment.

Au cours d'une première étape (figure 7A), une barge 200 vient préparer la zone temporaire du fond marin afin de permettre à celle-ci de supporter le poids des paniers remplis de ballast des contrepoids de plusieurs structures de support flottant. Cette préparation consiste à déverser sur le fond marin un matériau de remblais permettant au fond marin de pouvoir supporter le poids des paniers chargés de matériau de ballast tout en gardant une stabilité d'assiette acceptable.

Une fois le fond marin préparé, un ensemble de paniers 32 vides de contrepoids sont descendus en mer depuis la barge 200 et déposés sur le fond marin grâce à une grue 202 (figure 7B). Les paniers de contrepoids sont déposés les uns après les autres lors de l'avance de la barge, leur nombre dépendant du nombre d'éoliennes offshore du champ à installer (figure 7C).

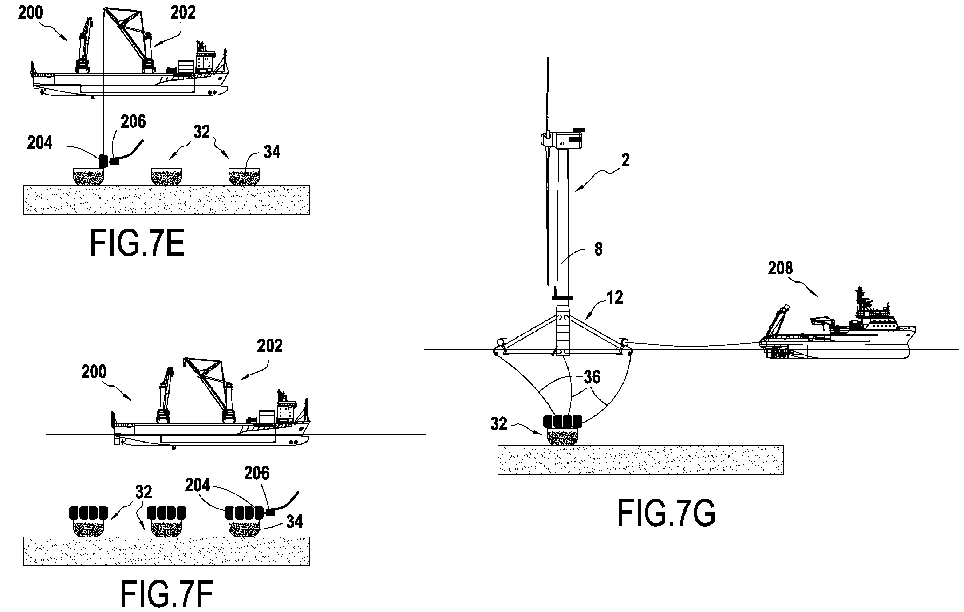

Comme représenté sur la figure 7D, les paniers 32 de contrepoids déposés sur le fond marin sont alors remplis les uns après les autres par un matériau de ballast 34 à partir de la barge. Une fois les paniers remplis de matériau de ballast, des bouées temporaires 204 sont connectées sur ces paniers au moyen de la grue 202 de la barge et de l'aide d'un ROV 206 (figure 7E). La figure 7F montre l'ensemble des paniers de contrepoids munis chacun de plusieurs bouées temporaires 204.

Au cours de l'étape suivante représentée par la figure 7G, le flotteur 12 de la structure de support flottant sur lequel a été préalablement monté le mât 8 d'une éolienne est alors remorqué par un remorqueur 208 à la verticale d'un panier 32 du contrepoids. A marée basse, la structure principale du flotteur est alors connectée au panier du contrepoids au moyen des liens de ballast 36 (figure 7G).

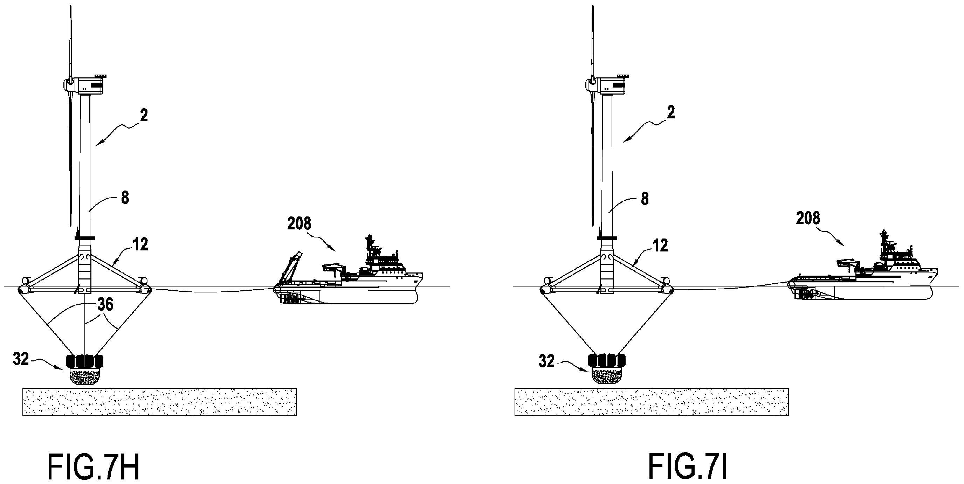

Par effet de la marée montante, le panier 32 du contrepoids se soulève du fond marin grâce aux liens de ballast 36 (figure 7H) afin de permettre un remorquage du flotteur 12 et du panier par le remorqueur 208 jusqu'à la zone d'implantation de l'éolienne en mer (figure 7I).

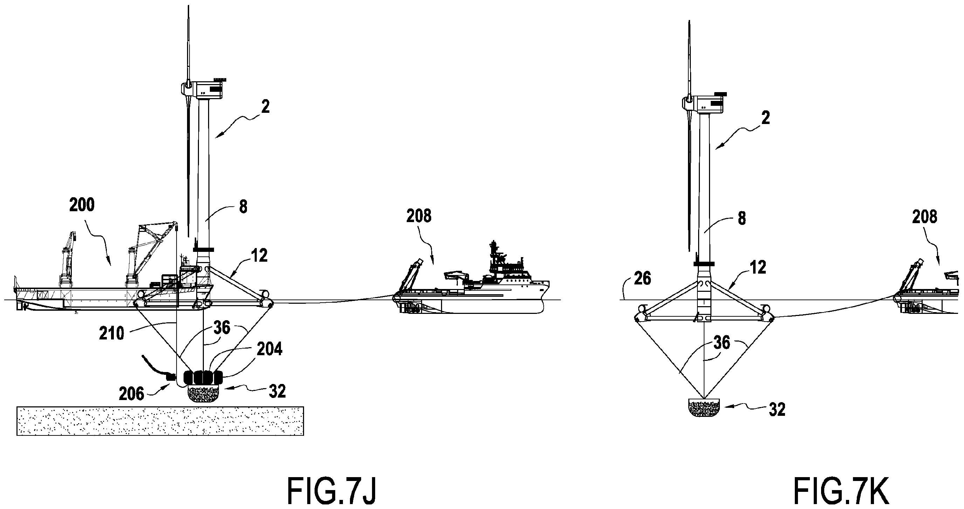

Une fois le flotteur 12 et le panier du contrepoids positionnés et maintenus à la verticale de la zone d'implantation choisie, la barge 200 est amenée pour venir déconnecter les uns après les autres les bouées temporaire 204 du panier 32. Cette opération est réalisée grâce au ROV 206 qui vient déconnecter chaque bouée temporaire et la remonter à bord de la barge grâce à un filin 210 (figure 7J).

Lorsque toutes les bouées temporaires sont déconnectées, la section « ballastable » de la structure centrale 26 du flotteur 12 est remplie d'eau de mer afin d'ajuster la ligne de flottaison du flotteur à la profondeur d'immersion souhaitée (figure 7K).

Dans une variante de ce deuxième mode de réalisation (non représentée sur les figures), il est prévu, à la place de l'étape de préparation de la zone temporaire du fond marin pour lui permettre de supporter le poids des paniers remplis de ballast des contrepoids, de déposer sur le fond marin un système de descente du contrepoids.

Dans cette variante, le système de rehausse peut ainsi remplacer totalement ou partiellement l'effet de la marée montante sur la position relative du panier par rapport au fond. Selon les cas, le remplissage du panier par du matériau de ballast peut se faire entièrement ou partiellement sur le panier posé sur le système de rehausse. Dans le cas où le remplissage se fait partiellement sur le panier posé sur le système de rehausse un complément de matériau de ballast est effectué une fois le panier décollé du système de rehausse.

Ce système de descente du contrepoids comprend une embase large permettant au fond marin de supporter le poids du système et le panier vide du contrepoids de la structure de support flottant. Une fois le panier vide descendu et posé sur l'embase, les étapes du procédé d'installation de manière similaire à celles décrites précédemment en liaison avec les figures 7D à 7K.

Cette variante de réalisation peut être préférée car elle présente l'avantage de s'affranchir de la marée.

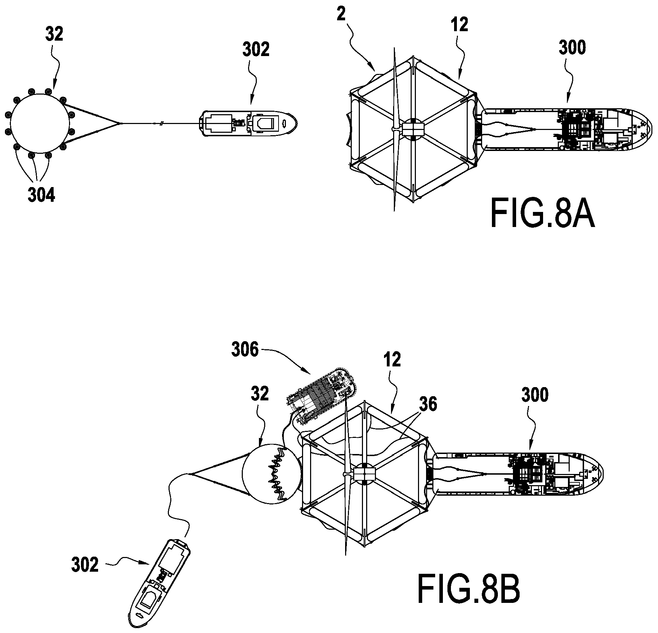

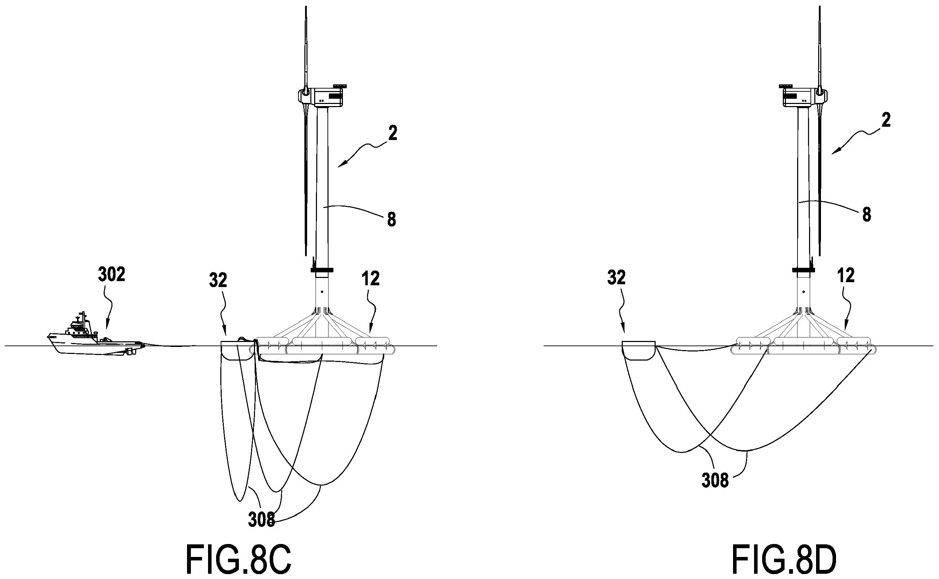

En liaison avec les figures 8A à 8H, on décrira un troisième mode de réalisation du procédé d'installation (ne relevant pas de l'invention et qui n'est présent qu'à titre illustratif) d'une éolienne offshore munie d'une structure de support flottant telle que décrite précédemment.

Cette variante de réalisation est particulièrement intéressante pour le comportement dynamique du contrepoids pendant la descente en liant le panier de celui-ci au flotteur par l'intermédiaire de plusieurs chaînes en caténaire ce qui permet de découpler les mouvements de l'un et de l'autre. De plus, aucune préparation du fond de la mer n'est requise.

Selon une première étape illustrée par la figure 8A, un premier remorqueur 300 est utilisé pour remorquer en mer le flotteur 12 de la structure de support flottant sur lequel a été préalablement monté le mât d'une éolienne 2. Le panier 32 vide du contrepoids de la structure de support flottant est quant à lui remorqué indépendamment par un second remorqueur 302.

On notera que pour faciliter le remorquage du panier du contrepoids, celui-ci peut être muni de bouées temporaires 304. On notera également que les deux remorqueurs 300, 302 sont équipés chacun d'un système de positionnement dynamique.

Une fois parvenus à la zone d'implantation en mer de l'éolienne, les remorqueurs 300, 302 manoeuvrent pour rapprocher le flotteur 12 du panier 32 afin de permettre la mise en place des connexions entre ces deux éléments (figure 8B).

Ces connexions sont notamment les liens de ballast 36 reliant le panier 32 à chaque extrémité des tubes de la structure principale du flotteur. Cette opération peut être réalisée à l'aide d'un bateau de connexion en positionnement dynamique 306.

Comme représenté sur la figure 8C, des chaînes de lestage 308 sont également connectées entre différents points du panier 32 et la structure principale du flotteur 12. Ces chaînes de lestage sont par exemple au nombre de trois. Au cours de ces opérations, d'autres liens de retenue (non représentés sur les figures) peuvent être connectés entre le panier et le flotteur pour limiter l'éloignement du flotteur par rapport au panier.

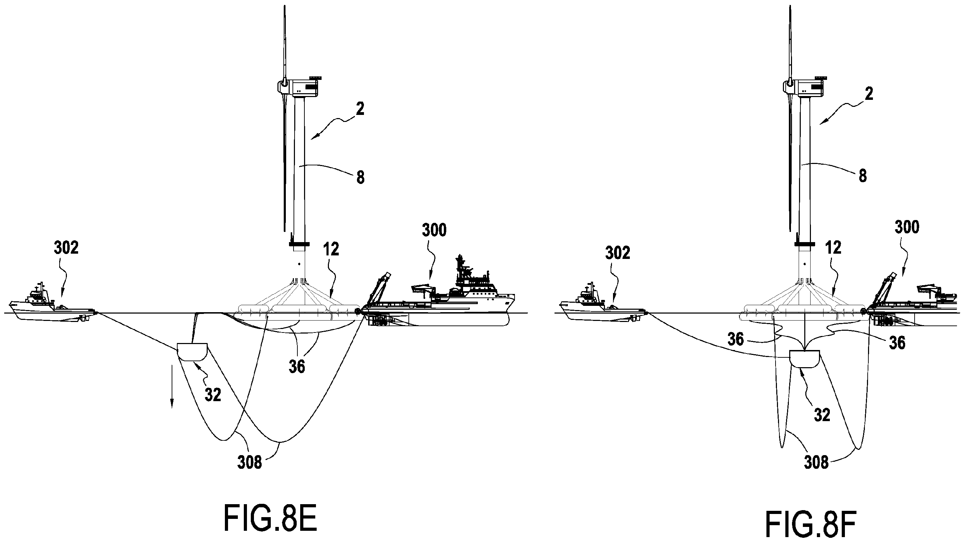

Au cours de l'étape suivante, le panier 32 du contrepoids est éloigné du flotteur 12 puis immergé progressivement par réduction de la flottaison des bouées temporaires 304 ou par ajout de poids dans le panier (figure 8E). L'immersion du panier est poursuivie jusqu'à une première position d'équilibre sous le flotteur (figure 8F).

Le panier 32 du contrepoids est descendu davantage en réduisant de manière continue ou par pallier la flottaison des bouées temporaires (ou par ajout de lest). On notera que la descente du panier entraîne une réduction de la caténaire des chaînes de lestage 308 sous le panier et donc du poids qu'il faut compenser par flottaison. Il est envisagé un processus dans lequel la descente du panier provoquerait automatiquement la baisse de sa flottaison et une baisse également du lest avec un décalage tel que la vitesse de descente du panier serait suffisamment faible.

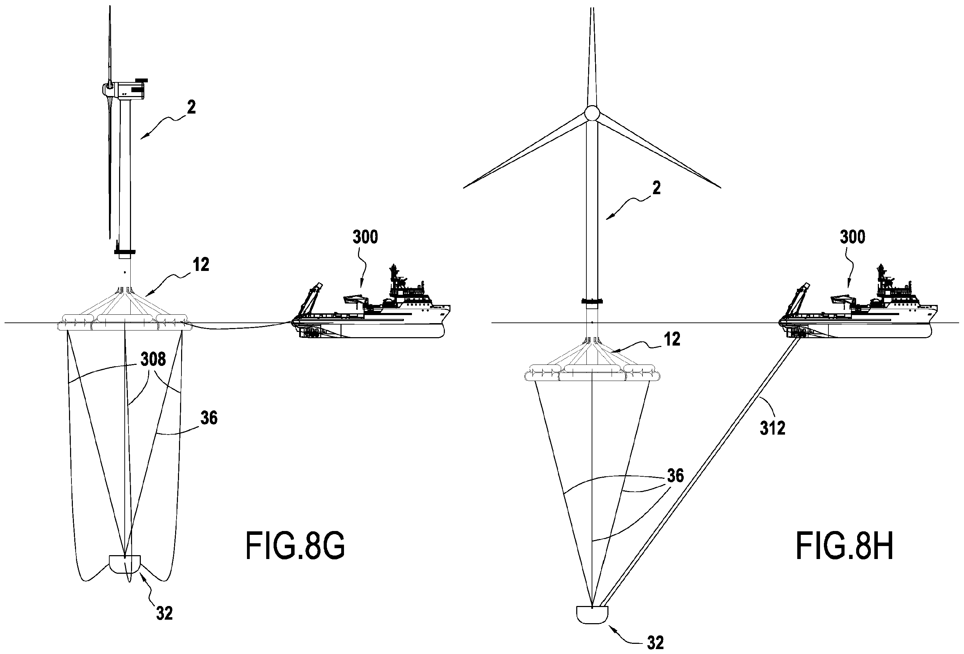

La descente du panier se termine au moment où les liens de ballast 36 sont tendus (figure 8G). Si besoin, il peut être envisagé que la descente s'arrête automatiquement à des profondeurs voulues (par exemple légèrement avant que les liens de ballast se tendent pour pouvoir s'assurer que leur configuration est acceptable) en s'assurant que la perte de lest soit rattrapée par la perte de flottaison à la profondeur voulue.

Enfin, le panier 32 du contrepoids est rempli par le matériau de ballast 34, par exemple à partir d'un bateau de ballastage 310 déversant le matériau de ballast dans le panier à l'aide d'une gouttière ou tube de remplissage 312 (figure 8H).

Cette dernière étape peut être remplacée par le remplissage d'éléments de flottaison liés au panier dans le cas où le lest était déjà présent dans ce panier particulier ayant une réserve de flottabilité équivalente au poids final vu par les liens de ballast.

On notera que les chaînes de lestage 308 pourront être utilisées pour servir pour réaliser le cas échéant un système d'ancrage de la structure de support flottant.

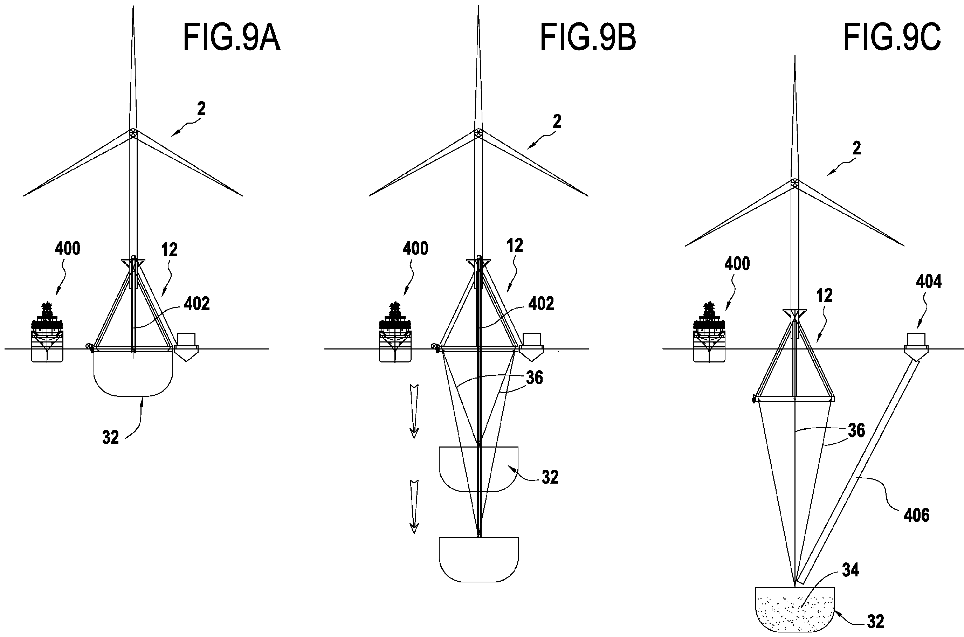

En liaison avec les figures 9A à 9C, on décrira un quatrième mode de réalisation du procédé d'installation (ne relevant pas de l'invention et qui n'est présent qu'à titre illustratif) d'une éolienne offshore munie d'une structure de support flottant telle que décrite précédemment.

Dans ce quatrième mode de réalisation il est prévu de transporter en mer conjointement par un remorqueur 400 le flotteur 12 avec son panier 32 de contrepoids vide de lest positionné en dessous de la structure de support flottant jusqu'à la zone d'implantation de l'éolienne (figure 9A).

Le panier 32 est alors descendu par un système de levage 402 installé au niveau de la plateforme de l'éolienne 2 jusqu'à ce que les liens de ballast soient tendus (figure 9B). Le flotteur 12 connecté au contrepoids est ensuite remorqué jusqu'à la zone d'implantation de l'éolienne et le panier 32 peut alors être rempli avec du matériau de ballast à partir d'un bateau de ballastage 404 comme décrit précédemment (c'est-à-dire au moyen d'un tube 406 reliant le panier au bateau de ballastage - voir la figure 9C).

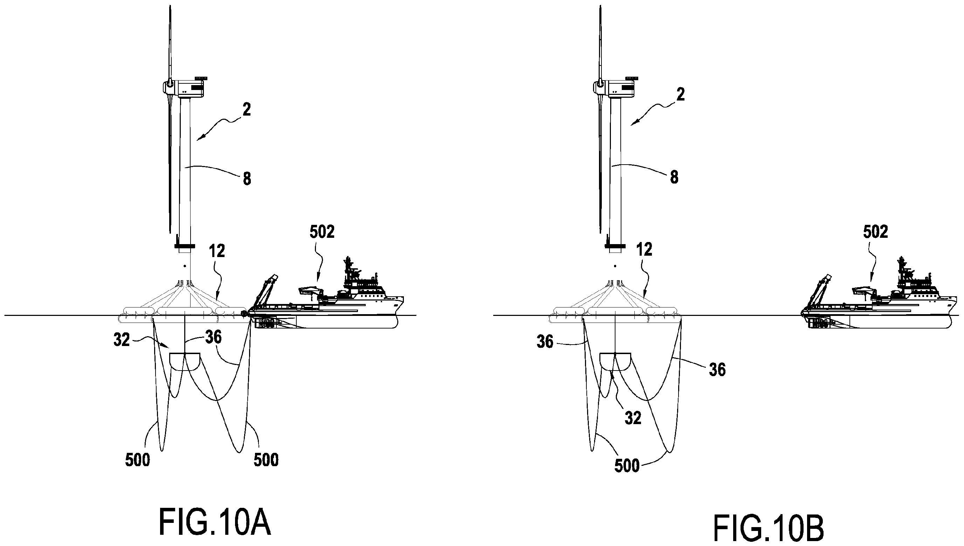

En liaison avec les figures 10A à 10D, on décrira maintenant un cinquième mode de réalisation du procédé d'installation (ne relevant pas de l'invention et qui n'est présent qu'à titre illustratif) d'une éolienne offshore munie d'une structure de support flottant telle que définie précédemment.

Dans ce cinquième mode de réalisation, le procédé comprend dans une première étape illustrée sur la figure 10A, la connexion de liens de ballast 36 et de chaînes de lestage 500 entre le panier 32 du contrepoids et le flotteur 12. Une fois cette opération effectuée, le flotteur connecté au contrepoids est remorqué en mer à l'aide d'un remorqueur 502 jusqu'à la zone d'implantation de l'éolienne (figure 10B). Conjointement, le panier 32 vide du contrepoids positionné sous la structure de support flottant et de son flotteur est transporté en mer.

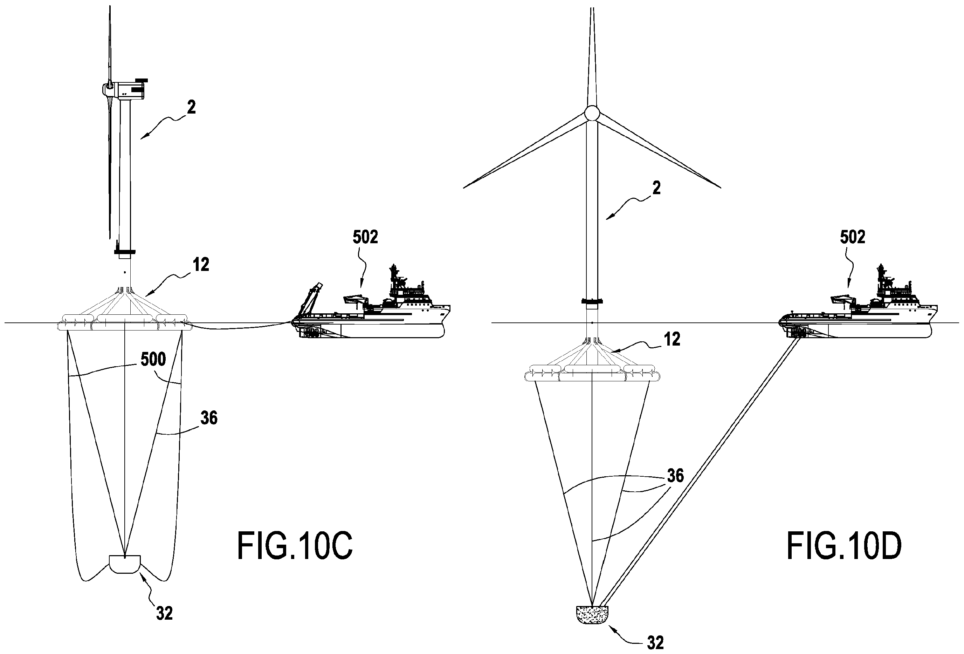

Le panier est immergé par ballastage de manière progressive et la position du panier est contrôlée par l'effet caténaire des chaînes de lestage pour le descendre dans une position d'équilibre sous le flotteur (figure 10C).

Le panier 32 est alors descendu sous le flotteur jusqu'à ce que les liens de ballast 36 soient tendus, puis il est rempli par un matériau de ballast afin d'immerger le flotteur (figure 10D). Enfin, le flotteur connecté au contrepoids est remorqué jusqu'à la zone d'implantation de l'éolienne.

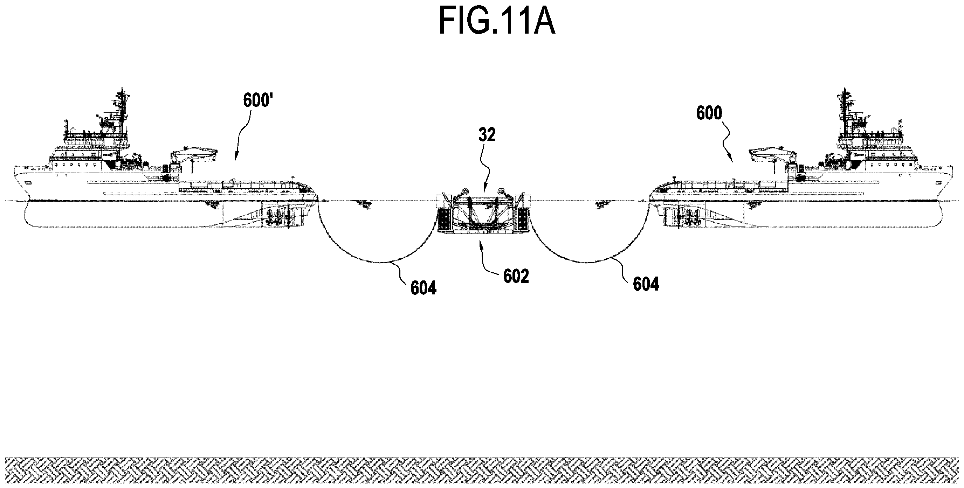

En liaison avec les figures 11A à 11F, on décrira maintenant un mode de réalisation du procédé d'installation selon l'invention d'une éolienne offshore munie d'une structure de support flottant telle que définie précédemment.

Dans ce mode de réalisation de l'invention, le procédé comprend dans une première étape illustrée sur la figure 11A, le transport en mer par un remorqueur 600 du panier 32 du contrepoids positionné de manière amovible à l'intérieur d'une structure submersible de support flottant 602 jusqu'à la zone d'implantation de l'éolienne.

Dans ce mode de réalisation, le panier 32 du contrepoids est préalablement rempli de matériau de ballast et la structure submersible de support flottant 602 est remplie d'air à la pression atmosphérique avant le départ afin d'avoir la flottabilité nécessaire pour maintenir en flottaison le panier du contrepoids.

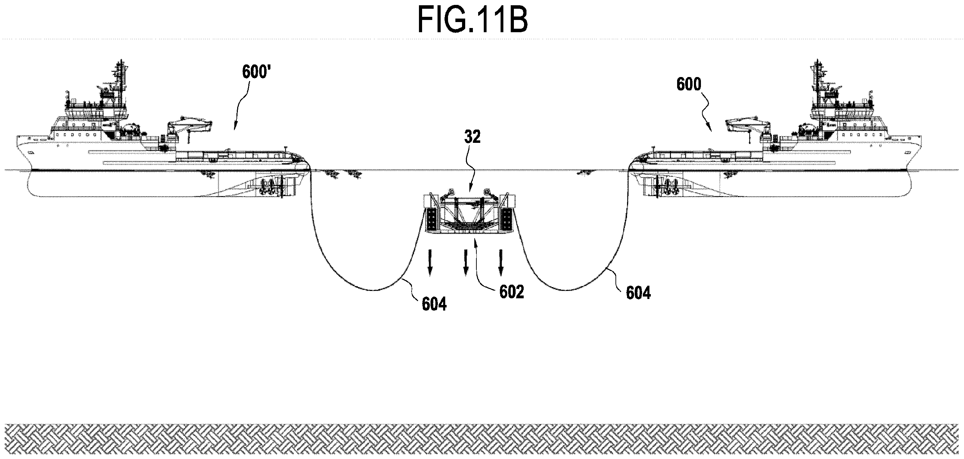

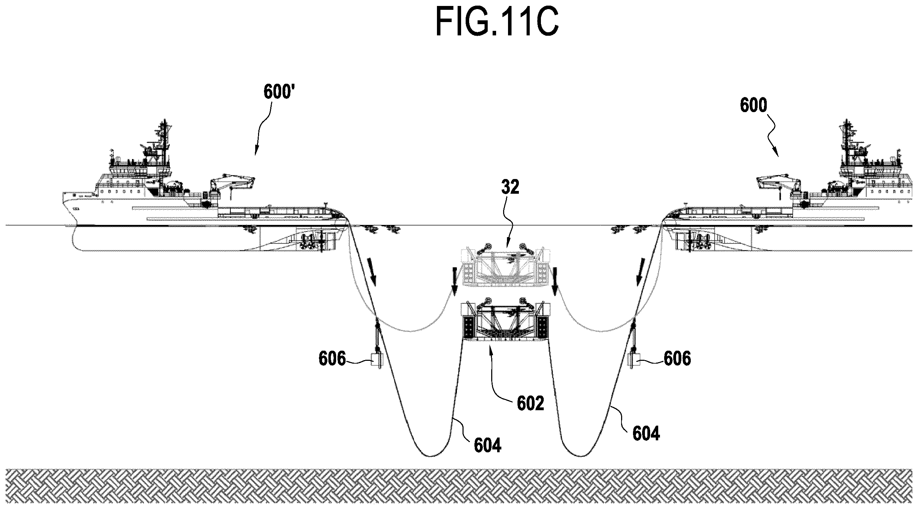

Comme représenté sur les figures 11B et 11C, une fois arrivé sur la zone d'implantation de l'éolienne, le panier 32 de contrepoids et la structure submersible de support flottant 602 sont descendus sous l'eau par un système de chaînes de ballast 604 accrochées à la structure submersible de support flottant jusqu'à atteindre la profondeur désirée. A cet effet, les chaînes de ballast 604 ont un poids linéaire prédéfini et sont accrochées à la structure submersible de support flottant à l'aide d'un second remorqueur 600'. Des ancres 606 peuvent être accrochées aux chaînes de ballast 604 afin de stabiliser le panier de contrepoids (figure 11C).

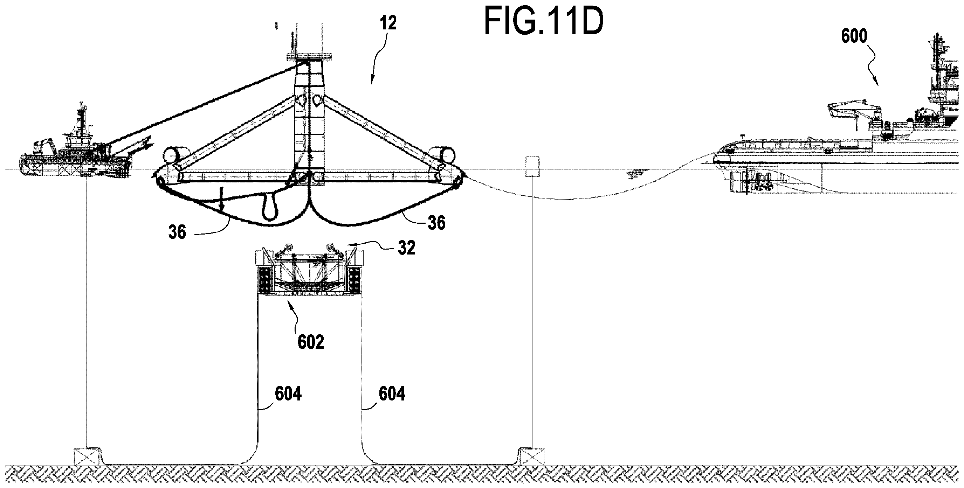

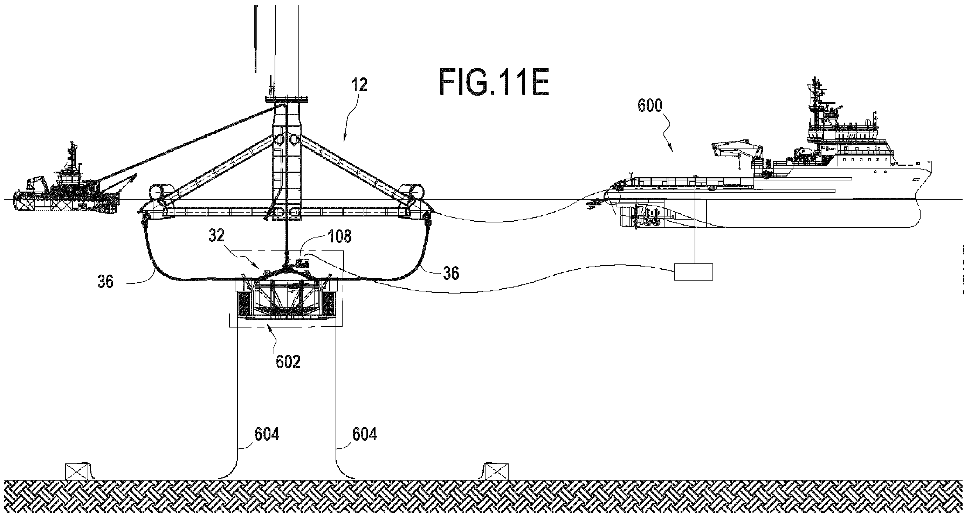

L'éolienne avec son flotteur 12 est ensuite remorquée jusqu'à la zone d'implantation de l'éolienne et positionnée à la verticale du panier 32 de contrepoids (figure 11D). Les liens de ballast 36 préalablement connectés au flotteur 12 sont alors descendus et connectés un par un au panier 32 de contrepoids au moyen par exemple d'un véhicule sous-marin téléguidé 108 (figure 11E).

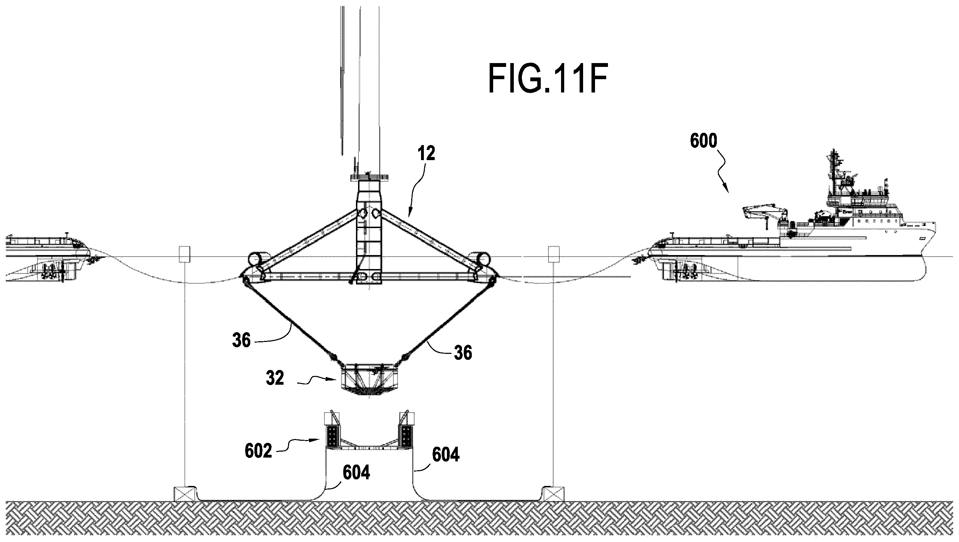

Au cours de l'étape suivante, la structure submersible de support flottant 602 est progressivement remplie d'eau (en remplacement de l'air) afin de perdre de la flottabilité. Au cours de ce remplissage, elle descend avec le panier de contrepoids jusqu'à ce que les liens de ballast 36 entrent en tension. La descente du panier est alors stoppée et le poids du panier est progressivement transféré au flotteur 12 de l'éolienne qui voit les liens de ballast 36 se tendre sous le poids du panier du contrepoids (figure 11F).

Quand l'intégralité du poids du panier est transférée au flotteur de l'éolienne, la structure submersible de support flottant 602 poursuit sa descente afin de se désengager complètement du panier 32 de contrepoids. Lorsqu'elle se retrouve remplie d'eau, elle se situe alors au-dessus du fond marin à une distance de quelques mètres sous le panier, les chaînes de ballast 604 assurant son maintien dans cette position. L'éolienne et son contrepoids peuvent ensuite être remorquées par le remorqueur 600 jusqu'à leur zone d'implantation.

Dans une variante de réalisation (non représentée sur les figures) de ce sixième mode de réalisation, le panier de contrepoids n'est que partiellement rempli au préalable de matériau de ballast. Après que l'éolienne et son contrepoids aient été remorqués sur la zone d'implantation, un navire transportant le reste du matériau de ballast se positionne aux abords de l'éolienne et remplit le panier de contrepoids à l'aide d'une tuyauterie flexible jusqu'à ce que l'éolienne atteigne le tirant d'eau requis.

Dans un septième mode de réalisation (non représenté sur les figures) du procédé d'installation (ne relevant pas de l'invention et qui n'est présent qu'à titre illustratif) d'une éolienne offshore munie d'une structure de support flottant telle que définie précédemment, le panier de contrepoids est doté de compartiments de ballast d'air.

Ce panier est préalablement coulé dans le port et le flotteur de l'éolienne est positionné à la verticale du panier afin de connecter les liens de ballast par plongeurs. D'autre liens temporaires, plus courts (d'environ 5 mètres) sont connectés entre le flotteur et le panier. Le panier est ensuite « déballasté » afin de venir se coller au flotteur de l'éolienne. L'ensemble est remorqué jusqu'à un site en eau abrité d'environ 20m de profondeur d'eau où le panier est ballasté jusqu'à ce qu'il devienne pesant et soit repris en tension par les liens temporaires. L'ensemble est alors remorqué jusqu'à la zone d'implantation de l'éolienne où l'éolienne est amarrée. Les liens temporaires sont déconnectés et le panier descend dans la colonne d'eau jusqu'à être repris en tension par les liens de ballast.

Par la suite, un navire transportant le reste du matériau de ballast se positionne aux abords de l'éolienne et remplit le panier de contrepoids à l'aide d'une tuyauterie flexible jusqu'à ce que l'éolienne atteigne le tirant d'eau requis.

On notera que comme pour le sixième mode de réalisation, ce septième mode de réalisation peut être mis en oeuvre avec un panier de contrepoids qui est préalablement complètement ou partiellement seulement rempli de matériau de ballast.

## Revendications

1. Procédé d'installation d'une éolienne offshore munie d'une structure de support flottant qui comprend un flotteur (12) destiné à être en partie immergé et sur lequel est destiné à être assemblé un mât (8) d'éolienne, et un contrepoids (16) relié au flotteur et destiné à être immergé sous le flotteur, le flotteur (12) comprenant :

   une structure principale (18) de forme torique ou polygonale à au moins cinq côtés qui est formée par au moins un tube (20) destiné à être immergé ;
   une structure tubulaire centrale (26) ayant un diamètre adapté pour recevoir le mât (8) de l'éolienne et comprenant une section apte à être ballastée afin d'ajuster la ligne de flottaison du flotteur ;
   une première série de bracons horizontaux (28) régulièrement répartis autour d'un axe vertical et reliant la structure principale à la structure centrale ; et
   une seconde série de bracons obliques (30) régulièrement répartis autour d'un axe vertical (Y-Y) et reliant la structure principale à la structure centrale en formant un angle ($\alpha$) compris entre 15° et 60° avec les bracons horizontaux (28) ;
   le contrepoids (16) comprenant un panier (32) apte à recevoir un matériau de ballast (34) et des liens de ballast (36) reliant le panier à la structure principale (18) du flotteur en formant un angle ($\beta$) compris entre 15° et 45° avec l'axe vertical (Y-Y),
   le procédé comprenant les étapes successives de :

      transport en mer d'un panier (32) du contrepoids (16) de la structure de support flottant positionné dans une structure submersible de support flottant (602) remplie d'air ;
      descente en mer de la structure submersible de support flottant (602) par un système de chaînes de ballast (604) accrochées à celle-ci ;
      remorquage en mer du flotteur (12) à la verticale du panier de contrepoids, les liens de ballast (36) ayant été préalablement connectés au flotteur ;
      connexion des liens de ballast au panier du contrepoids ;
      remplissage progressif de la structure submersible de support flottant afin de lui faire perdre de la flottabilité jusqu'à ce que les liens de ballast entrent en tension et que la structure submersible de support flottant se désengage complètement du panier de contrepoids ;
      remorquage en mer du flotteur connecté au contrepoids jusqu'à la zone d'implantation de l'éolienne ; et
      amarrage du flotteur connecté au contrepoids sur la zone d'implantation de l'éolienne.

**2.** Procédé selon la revendication 1, dans lequel le transport en mer du panier de contrepoids est réalisé avec un panier préalablement rempli de matériau de ballast.

**3.** Procédé selon la revendication 1, dans lequel le transport en mer du panier de contrepoids est réalisé avec un panier faiblement rempli de matériau de ballast, le reste du matériau de ballast venant remplir le panier une fois que l'éolienne et son contrepoids aient été remorqués sur la zone d'implantation.

**4.** Procédé selon la revendication 3, dans lequel le reste du matériau de ballast vient remplir du matériau de ballast au moyen d'un navire positionné aux abords de l'éolienne jusqu'à ce que l'éolienne atteigne le tirant d'eau requis.

**5.** Procédé selon l'une quelconque des revendications 1 à 4, dans lequel l'étape de descente en mer de la structure submersible de support flottant comprend l'accrochage du système de chaînes de ballast (604) par un remorqueur (600') autre que le remorqueur (600) utilisé pour le transport en mer du panier du contrepoids.

**6.** Procédé selon l'une quelconque des revendications 1 à 5, dans lequel l'étape de descente en mer de la structure submersible de support flottant comprend en outre l'accrochage d'ancres (606) aux chaînes de ballast (604) afin de stabiliser le panier de contrepoids.

**7.** Procédé selon l'une quelconque des revendications 1 à 6, dans lequel, lorsque la structure submersible de support flottant se retrouve remplie d'eau au cours de l'étape de remplissage, elle se situe au-dessus du fond marin sous le panier, les chaînes de ballast (604) assurant son maintien dans cette position.

**Patentansprüche**

**1.** Verfahren zur Installation einer Offshore-Windkraftanlage, die mit einer schwimmenden Trägerstruktur versehen ist, die einen Schwimmkörper (12), der dazu bestimmt ist, teilweise eingetaucht zu sein, und auf dem ein Mast (8) der Windkraftanlage dazu bestimmt ist, zusammengebaut zu werden, und ein Gegengewicht (16) umfasst, das mit dem Schwimmkörper verbunden ist und dazu bestimmt ist, unter dem Schwimmkörper eingetaucht zu sein, wobei der Schwimmkörper (12) umfasst:

eine Hauptstruktur (18) mit torischer oder vieleckiger Form mit mindestens fünf Seiten, die aus mindestens einem Rohr (20) gebildet ist, das dazu bestimmt ist, eingetaucht zu sein,
eine mittlere rohrförmige Struktur (26), die einen Durchmesser aufweist, der so gestaltet ist, dass er den Mast (8) der Windkraftanlage aufnimmt, und einen Abschnitt umfasst, der geeignet ist, beballastet zu werden, um die Wasserlinie des Schwimmkörpers anzupassen,
eine erste Reihe horizontaler Kopfbänder (28), die gleichmäßig um eine vertikale Achse verteilt sind und die Hauptstruktur mit der mittleren Struktur verbinden, und
eine zweite Reihe schräger Kopfbänder (30), die gleichmäßig um eine vertikale Achse (Y-Y) verteilt sind und die Hauptstruktur mit der mittleren Struktur verbinden und dabei einen Winkel ($\alpha$) von zwischen 15° und 60° mit den horizontalen Kopfbändern (28) bilden,
wobei das Gegengewicht (16) einen Korb (32), der geeignet ist, ein Ballastmaterial (34) aufzunehmen, und Ballastverbindungen (36) umfasst, die den Korb mit der Hauptstruktur (18) des Schwimmkörpers verbinden und dabei mit der vertikalen Achse (Y-Y) einen Winkel ($\beta$) von zwischen 15° und 45° bilden,
wobei das Verfahren die aufeinanderfolgenden Schritte umfasst des:

Transportierens eines Korbs (32) des Gegengewichts (16) der schwimmenden Trägerstruktur, der in einer mit Luft gefüllten Tauchstruktur des schwimmenden Trägers (602) positioniert ist, auf dem Meer,
Absenkens der Tauchstruktur des schwimmenden Trägers (602) auf dem Meer durch ein System von daran angehängten Ballastketten (604),
Schleppens des Schwimmkörpers (12) auf dem Meer in der Vertikalen des Gegengewichtkorbs, wobei die Ballastverbindungen (36) vorhergehend mit dem Schwimmkörper verbunden wurden,
Verbindens der Ballastverbindungen mit dem Korb des Gegengewichts,
allmählichen Füllens der Tauchstruktur des schwimmenden Trägers, um zu bewirken, dass sie an Schwimmfähigkeit verliert, bis die Ballastverbindungen in Spannung gelangen und die Tauchstruktur des schwimmenden Trägers sich vollständig von dem Gegengewichtkorb löst,
Schleppens des mit dem Gegengewicht verbundenen Schwimmkörpers auf dem Meer bis zu der Aufstellungszone der Windkraftanlage, und

Festmachens des mit dem Gegengewicht verbundenen Schwimmkörpers an der Aufstellungszone der Windkraftanlage.

**2.** Verfahren nach Anspruch 1, wobei der Transport des Gegengewichtkorbs auf dem Meer mit einem im Voraus mit Ballastmaterial gefüllten Korb ausgeführt wird.

**3.** Verfahren nach Anspruch 1, wobei der Transport des Gegengewichtkorbs auf dem Meer mit einem schwach mit Ballastmaterial gefüllten Korb ausgeführt wird, wobei der Rest des Ballastmaterials den Korb füllen wird, nachdem die Windkraftanlage und ihr Gegengewicht in die Aufstellungszone geschleppt wurden.

**4.** Verfahren nach Anspruch 3, wobei der Rest des Ballastmaterials Ballastmaterial mittels eines Schiffs, das in der Umgebung der Windkraftanlage positioniert ist, füllt, bis die Windkraftanlage den erforderlichen Tiefgang erreicht.

**5.** Verfahren nach einem der Ansprüche 1 bis 4, wobei der Schritt des Absenkens der Tauchstruktur des schwimmenden Trägers auf dem Meer das Anhängen des Ballastkettensystems (604) durch ein Schleppschiff (600') umfasst, das sich von dem Schleppschiff (600) unterscheidet, das für den Transport des Korbs des Gegengewichts auf dem Meer verwendet wird.

**6.** Verfahren nach einem der Ansprüche 1 bis 5, wobei der Schritt des Absenkens der Tauchstruktur des schwimmenden Trägers auf dem Meer ferner das Anhängen von Ankern (606) an den Ballastketten (604) umfasst, um den Gegengewichtkorb zu stabilisieren.

**7.** Verfahren nach einem der Ansprüche 1 bis 6, wobei, wenn die Tauchstruktur des schwimmenden Trägers während des Schritts des Füllens mit Wasser gefüllt ist, sie sich über dem Meeresboden unter dem Korb befindet, wobei die Ballastketten (604) ihr Halten in dieser Position sicherstellen.

**Claims**

**1.** A method for installing an offshore wind turbine provided with a floating support structure which comprises a float (12) intended to be partly immersed and on which a wind turbine mast (8) is intended to be assembled, and a counterweight (16) connected to the float and intended to be immersed under the float, the float (12) comprising:

a toroid or polygon-shaped main structure (18) with at least five sides which is formed by at least one tube (20) intended to be immersed;
a central tubular structure (26) having a diameter adapted to receive the mast (8) of the wind turbine and comprising a section able to be ballasted in order to adjust the waterline of the float;
a first series of horizontal struts (28) evenly distributed about a vertical axis and connecting the main structure to the central structure; and
a second series of oblique struts (30) evenly distributed about a vertical axis (Y-Y) and connecting the main structure to the central structure at an angle ($\alpha$) comprised between 15° and 60° with the horizontal struts (28);
the counterweight (16) comprising a basket (32) able to receive ballast material (34) and ballast links (36) connecting the basket to the main structure (18) of the float at an angle ($\beta$) comprised between 15° and 45° with the vertical axis (Y-Y),
the method comprising the successive steps of:

transporting at sea a basket (32) of the counterweight (16) of the floating support structure positioned in a submersible floating support structure (602) filled with air;
descending into the sea the submersible floating support structure (602) by a system of ballast chains (604) attached thereto;
towing at sea the float (12) vertically to the counterweight basket, the ballast links (36) having been previously connected to the float;
connecting the ballast links to the basket of the counterweight;
progressive filling the submersible floating support structure in order to make it lose floatability until the ballast links are tensioned and the submersible floating support structure disengages completely from the counterweight basket;
towing at sea the float connected to the counterweight up to the area of implantation of the wind turbine; and
mooring the float connected to the counterweight on the area of implantation of the wind turbine

2. A method according to claim 1, wherein the counterweight basket is transported at sea with a basket previously filled with ballast material.

3. The method according to claim 1, wherein the counterweight basket is transported at sea with a basket lightly filled with ballast material, the rest of the ballast material filling the basket once the wind turbine and its counterweight have been towed over the implantation area

4. The method according to claim 3, wherein the rest of the ballast material fills ballast material using a ship positioned in the vicinity of the wind turbine until the wind turbine reaches the required draft.

5. The method according to any one of claims 1 to 4, wherein the step of descending into the sea the submersible floating support structure comprises the attachment of the system of ballast chains (604) by a tug (600') other than the tug (600) used for transporting at sea the basket of the counterweight.

6. A method according to any one of claims 1 to 5, wherein the step of descending into the sea the submersible floating support structure further comprises the attachment of anchors (606) to the ballast chains (604) in order to stabilize the counterweight basket.

7. A method according to any one of claims 1 to 6, wherein, when the submersible floating support structure is filled with water during the step of filling, it is located above the seabed under the basket, the ballast chains (604) ensuring its holding in this position.

FIG.1

FIG.2

FIG.3

FIG.5

FIG.4

FIG.6A          FIG.6B          FIG.6C

EP 3 854 673 B1

FIG.6D

FIG.6E

FIG.6F

EP 3 854 673 B1

FIG.6G

FIG.6H

FIG.6I

EP 3 854 673 B1

FIG.6J

FIG.6K

FIG.6L

FIG.6M

FIG.6N

FIG.6O

FIG.6Q

FIG.6P

FIG.7A

FIG.7B

FIG.7C

FIG.7D

FIG.7E

FIG.7F

FIG.7G

FIG.7I

FIG.7H

FIG.7J

FIG.7K

EP 3 854 673 B1

FIG.8A

FIG.8B

EP 3 854 673 B1

FIG.8C

FIG.8D

EP 3 854 673 B1

FIG.8E

FIG.8F

FIG.8G

FIG.8H

EP 3 854 673 B1

FIG.9A     FIG.9B     FIG.9C

FIG.10B

FIG.10A

31

FIG.10D

FIG.10C

# FIG.11A

EP 3 854 673 B1

# FIG.11B

EP 3 854 673 B1

# FIG.11C

EP 3 854 673 B1

FIG.11D

EP 3 854 673 B1

FIG.11E

EP 3 854 673 B1

FIG.11F

EP 3 854 673 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005021961 A
- WO 2006121337 A
- WO 2006132539 A
- JP 2015009591 A
- JP 2002285951 A
- US 2013019792 A
- EP 3153398 A
- WO 2017157399 A
- WO 2016161931 A
- US 2003168864 A
- US 2008240864 A
- US 2017051724 A